# FASCICULE DE BREVET EUROPEEN

(11) **EP 2 828 490 B1**
(45) Date de publication et mention de la délivrance du brevet: **05.02.2020**
(21) Numéro de dépôt: 13719903.0
(22) Date de dépôt: 19.03.2013
(51) Int. Cl.: F01D 17/14, F02K 1/08, F02K 1/15

(54) **TUYÈRE À SECTION VARIABLE ET NACELLE POUR TURBORÉACTEUR D'AÉRONEF ÉQUIPÉE D'UNE TELLE TUYÈRE**
STRAHLROHR MIT VARIABLEN ABSCHNITTEN UND FLUGZEUGTURBODÜSENMOTORGONDEL MIT EINEM SOLCHEN STRAHLROHR
VARIABLE-SECTION JET PIPE AND AIRCRAFT TURBOJET ENGINE NACELLE EQUIPPED WITH SUCH A JET PIPE

(30) Priorité: 20.03.2012 FR 1252472
(43) Date de publication de la demande: 28.01.2015
(73) Titulaire: Safran Nacelles, 76700 Gonfreville-l'Orcher (FR)
(72) Inventeur: HURLIN, Hervé, F-91430 Igny (FR); MAALIOUNE, Hakim, F-78630 Orgeval (FR); KERBLER, Olivier, F-92160 Antony (FR)
(74) Mandataire: Delorme, Nicolas
(86) Numéro de dépôt international: PCT/FR2013/050585
(87) Numéro de publication internationale: WO 2013/140088

(56) Documents cités:
- EP-A2- 1 482 159
- EP-A2- 2 098 704
- EP-A2- 2 103 784
- US-A- 2 623 352
- US-A- 3 040 523
- US-A1- 2002 125 340
- US-A1- 2004 237 534
- US-A1- 2010 006 708
- US-A1- 2010 224 734
- US-A1- 2011 180 145

## Description

La présente invention se rapporte à une nacelle pour moteur d'aéronef, à tuyère de section variable.

Comme cela est connu en soi, une nacelle de moteur d'aéronef permet de canaliser l'air extérieur vers ce moteur, et d'assurer l'éjection de cet air à grande vitesse de manière à fournir la poussée nécessaire.

Dans les turboréacteurs à double flux, le flux d'air brassé par la soufflante se divise, en aval de celle-ci, en un flux primaire (dit aussi « chaud ») qui rentre au cœur du turboréacteur pour y subir plusieurs compressions et une détente, et en un flux secondaire (dit aussi « froid »), qui circule à l'intérieur d'une veine sensiblement annulaire, définie d'une part par un carénage du moteur (structure interne fixe, appelée aussi « IFS »), et d'autre part par le carénage extérieur de la nacelle.

Le flux d'air froid, qui sort en aval de la nacelle par une tuyère de sortie définie par le bord aval de cette nacelle, fournit l'essentiel de la poussée.

Dans le cas de moteurs à très fort taux de dilution, pour des raisons d'optimisation aérodynamique pour assurer un fonctionnement correct de la soufflante et aussi pour optimiser la consommation de carburant, il est tout à fait avantageux de pouvoir régler la section de la sortie du flux d'air froid en aval de la nacelle : il est en effet utile de pouvoir augmenter cette section lors des phases de décollage et d'atterrissage, et de la réduire pendant les phases de croisière : on parle souvent de tuyère adaptative, ou bien encore de « VFN » (Variable Fan Nozzle).

Des exemples de telles tuyères adaptatives sont connues par exemple des demandes de brevet FR10/52971, FR10/53282, FR10/57240 déposées par la demanderesse.

Classiquement, la variation de la section de sortie du flux froid est effectuée au moyen d'actionneurs hydrauliques ou électromécaniques, permettant de déplacer tout ou partie du carénage extérieur de la nacelle.

L'utilisation de tels actionneurs induit un surcroît de poids, d'encombrement et de coût. Leur intégration dans la nacelle, déjà très encombrée par de nombreux organes, pose un certain nombre de difficultés techniques.

La présente invention a ainsi notamment pour but de fournir des moyens d'actionnement pour tuyère de section variable, qui permettent de résorber ces inconvénients de la technique antérieure.

On atteint notamment ce but de l'invention avec une tuyère de section variable pour nacelle d'aéronef selon la revendication 1, dont au moins une partie est mobile entre au moins une position de moindre section et au moins une position de plus grande section, et comprenant des moyens pour déplacer ladite partie entre lesdites positions, ces moyens de déplacement comprenant d'une part des actionneurs piézoélectriques, et d'autre part des moyens de commande de ces actionneurs, les dits actionneurs étant disposés d'une manière choisie parmi les deux suivantes :
- lesdits actionneurs sont disposés sur les deux faces de ladite partie,
- lesdits actionneurs sont disposés bout à bout de manière à former des bielles d'actionnement.

Grâce à ces caractéristiques, on obtient des moyens de déplacement de taille restreinte, légers et peu encombrants, que l'on peut commander par une alimentation appropriée en tension électrique.

Suivant d'autres caractéristiques optionnelles de la présente invention :
- lesdits actionneurs sont collés sur ladite partie mobile déformable ;
- ladite partie mobile comprend au moins un volet articulé ;
- des moyens d'amplification de mouvement sont interposés entre lesdites bielles et ladite partie mobile : ces moyens d'amplification, pouvant consister par exemple en bras de levier, permettent de convertir les petits déplacements des actionneurs piézoélectriques, en déplacements de plus grande amplitude ;
- des capteurs piézoélectriques sont positionnés pour détecter la position de ladite partie mobile : une propriété des éléments piézoélectriques est en effet qu'ils peuvent être utilisés en sens inverse, c'est-à-dire qu'ils peuvent engendrer une tension électrique qui est fonction des déplacements auxquels ils sont soumis ;
- lesdits moyens de commande comprennent d'une part un module électronique de supervision apte à envoyer une tension de commande dans lesdits actionneurs piézoélectriques, et d'autre part un module électronique d'acquisition, apte à recevoir une tension de position provenant desdits capteurs piézoélectriques, ces deux modules définissant une boucle d'asservissement.

La présente invention se rapporte également à une nacelle, remarquable en ce qu'elle comprend une tuyère de section variable conforme à ce qui précède.

D'autres caractéristiques et avantages de la présente invention apparaîtront à la lumière de la description qui va suivre, et à l'examen des figures ci-annexées, dans lesquelles :
- la figure 1 est une vue en perspective d'une nacelle pour turboréacteur d'aéronef, équipée d'une tuyère de section variable conforme à l'invention,
- la figure 2 est une vue en perspective éclatée d'un actionneur piézoélectrique équipant la nacelle de la figure 1,
- la figure 3 est une vue schématique en coupe axiale du mécanisme d'actionnement des volets de la tuyère de la figure 1,
- les figures 4, 5, 6 sont des vues analogues à celles de la figure 3 d'autres modes de réalisation d'une tuyère à section variable selon l'invention, et
- la figure 7 est une vue schématique d'un circuit de commande d'une tuyère à section variable selon la présente invention.

Sur l'ensemble des ces figures, des références identiques ou analogues représentent des organes ou ensembles d'organes identiques ou analogues.

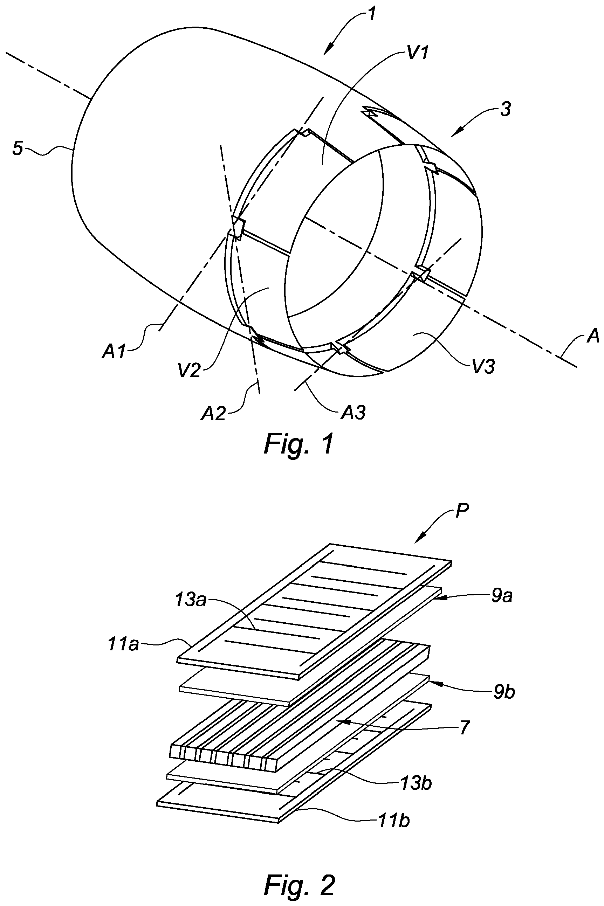

On se reporte à présent à la figure 1, sur laquelle on a représenté une nacelle 1 pour turboréacteur d'aéronef d'axe longitudinal A, équipé d'une tuyère à section variable 3 conforme à la présente invention.

Sur cette figure 1, l'amont de la nacelle est représenté à gauche, et l'aval de cette nacelle à droite.

Ainsi, en fonctionnement, l'air pénètre par l'entrée d'air 5 de la nacelle, et sort par la tuyère à section variable 3.

Comme indiqué dans le préambule de la présente description, il importe de pouvoir faire varier la section de la tuyère 3, lors des différentes phases du vol de l'aéronef.

Dans le mode de réalisation représenté à la figure 1, cette variation de la section de sortie de la tuyère est obtenue en faisant pivoter des volets mobiles V1, V2, V3, ... autour d'axes respectifs A1, A2, A3, ..., ces axes étant sensiblement perpendiculaires à l'axe longitudinal A de la nacelle.

Classiquement, ce pivotement est obtenu au moyen d'actionneurs hydrauliques ou électromécaniques.

De manière caractéristique selon la présente invention, on remplace ces actionneurs classiques par des actionneurs piézoélectriques.

On a représenté à la figure 2 un exemple d'élément piézoélectrique pouvant intervenir dans la réalisation de ces actionneurs.

Un tel élément piézoélectrique peut comprendre typiquement un complexe multicouches, formé de cristaux piézo-céramiques 7 prises en sandwich entre deux couches 9a, 9b d'époxy, elles-mêmes prises entre deux couches de polyimides 11a, 11b, dans lesquelles sont noyées des électrodes 13a, 13b.

De tels éléments piézoélectriques sont commercialisés par exemple par la société SMART MATERIAL.

Comme cela est connu en soi, lorsque l'on fait passer une tension électrique dans les électrodes 13a, 13b, les fibres piézo-céramiques 7 se déforment, conduisant à une variation de l'épaisseur de l'élément représenté à la figure 2.

Inversement, lorsque cet élément est soumis à des efforts provenant d'organes environnants, il entraîne une variation de la tension électrique mesurée aux bornes de ces électrodes 13a, 13b.

Le principe de la présente invention consiste à tirer partie de ces propriétés de l'élément piézoélectrique représenté à la figure 2, pour permettre le déplacement des parties mobiles de la tuyère à section variable 3.

Ainsi, dans le mode de réalisation de la figure 1, on peut empiler plusieurs éléments piézoélectriques P de sorte que lorsqu'ils sont soumis à une tension électrique, ils provoquent un déplacement des volets V1, V2, V3, ...

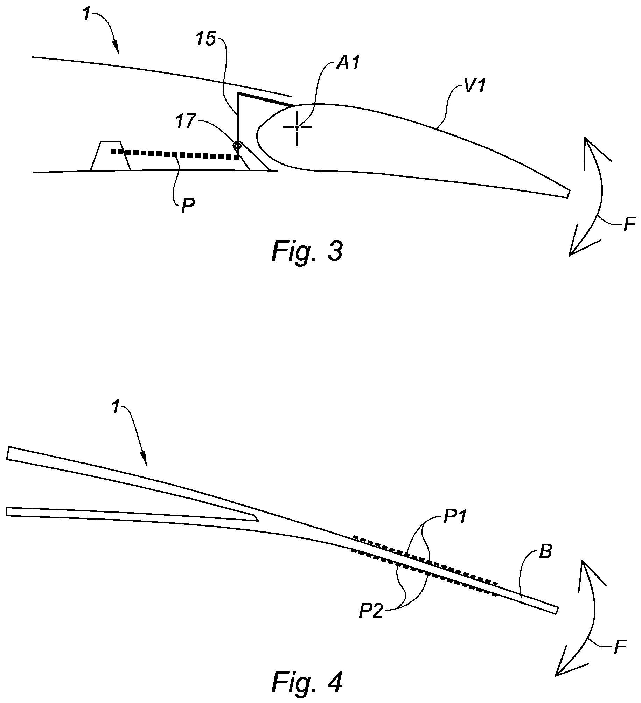

Plus précisément, comme cela est visible sur la figure 3, on peut envisager un système d'amplification de mouvements des éléments piézoélectriques P, comprenant par exemple un bras 15 articulé autour d'un axe 17 placé en aval de la nacelle 1, interposé entre d'une part l'empilement piézoélectrique P, et d'autre part chaque volet V1, V2, V3,..., articulé autour de son axe respectif A1, A2, A3, ...

Le système représenté à la figure 3 permet ainsi, grâce à un effet de bras de levier, de conférer aux volets V1, V2, V3, ... l'amplitude de mouvement souhaitée, tant vers l'extérieur que vers l'intérieur de la nacelle, comme cela est indiqué par la flèche F.

Dans la variante représentée à la figure 4, il n'y a plus de volet V comme représenté à la figure 1, mais le bord aval B de la nacelle 1 est déformable.

Ceci peut être obtenu par exemple en réalisant ce bord dans une tôle de fine épaisseur.

Dans ce cas, pour permettre les déplacements du bord aval de la tuyère B de manière à faire varier la section de sortie de la tuyère, on fixe des éléments piézoélectriques P1, P2, sur l'extrados et sur l'intrados du bord B.

On notera que l'on pourrait envisager de ne fixer de tels éléments piézoélectriques que sur l'une des faces de ce bord B.

Ces éléments piézoélectriques peuvent être fixés par exemple par collage sur le bord B.

Dans l'hypothèse où le bord B serait réalisé en matériau composite, on peut envisager de noyer les éléments piézoélectriques P1, P2 dans la masse du composite.

Par des commandes électriques appropriées de ces éléments piézoélectriques P1, P2, on peut ouvrir le bord B vers l'extérieur de la nacelle, ou bien ramener celui-ci vers l'intérieur de celle-ci, fournissant ainsi les moyens de variation de la section de tuyère de sortie de cette nacelle.

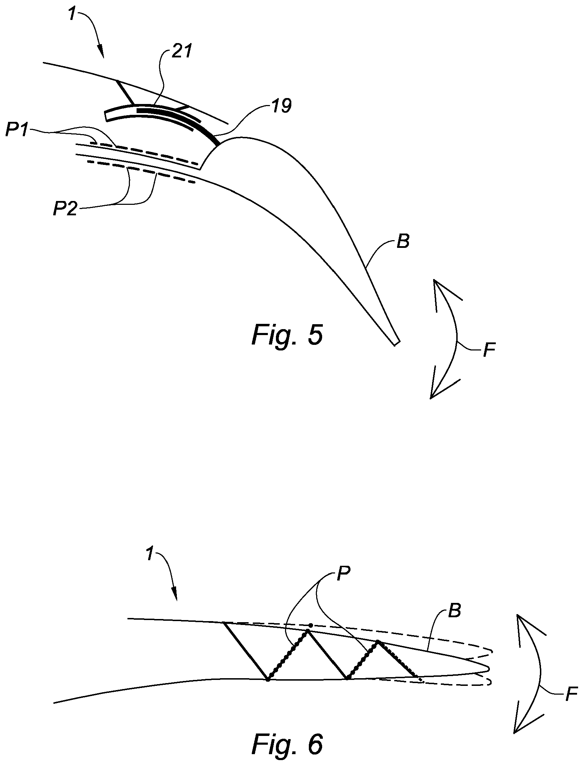

Dans le mode de réalisation de la figure 5, les éléments piézoélectriques P1, P2 permettent là encore de déformer le bord B vers l'intérieur ou vers l'extérieur de la nacelle, comme indiqué par la flèche F, étant noté que dans ce cas ce bord B est guidé dans ces déplacements par un système de glissières 19 montées coulissantes à l'intérieur de rails 21 solidaires de la nacelle 1.

Dans l'exemple représenté à la figure B, les éléments piézoélectriques B sont empilés à l'intérieur du bord aval B de la nacelle 1, de manière à former l'équivalent de bielles d'actionnement.

Ainsi, en soumettant ces éléments piézoélectriques à des tensions électriques appropriées, les bielles qu'ils forment peuvent s'allonger ou se rétracter.

En agençant correctement de telles bielles à l'intérieur du bord B de la nacelle 1, on peut obtenir les déformations souhaitées vers l'extérieur ou vers l'intérieur de la nacelle, comme indiqué par les flèches F et par les pointillés représentés à la figure 6.

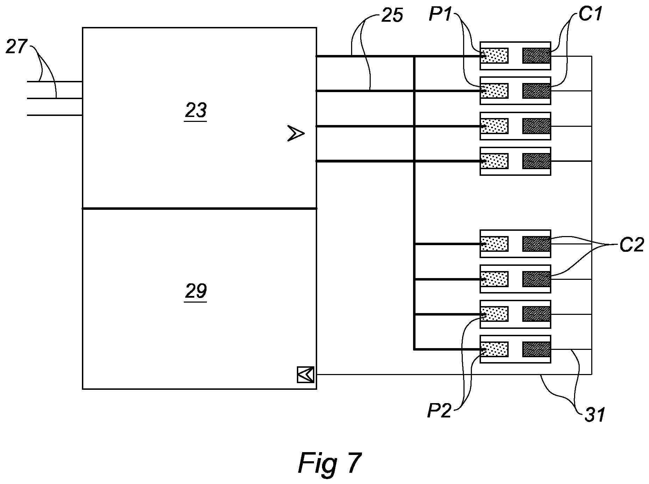

On a représenté à la figure 7 un ensemble de commandes de tuyère à section variable conforme à l'invention.

Comme cela est visible sur cette figure, cet ensemble de commandes comprend un module électronique de supervision relié électriquement aux actionneurs piézoélectriques P1, P2 par un circuit 25 et alimenté par un courant de force par un circuit 7.

Cet ensemble de commandes comprend également un module électronique d'acquisition 29, relié par un circuit électrique 31 à une pluralité de capteurs piézoélectriques C1, C2.

Le module électronique de supervision 23 et le module électronique d'acquisition 29 sont interfacés entre eux, de manière que l'ensemble représenté à la figure 7 forme une boucle d'asservissement.

Plus précisément, lorsque l'on souhaite augmenter ou réduire la tuyère de section variable, on envoie un ordre au circuit électronique de supervision 23, lequel va envoyer via le circuit 25 des informations électriques aux actionneurs piézoélectriques P1, P2, permettant de réaliser l'articulation ou la déformation du bord arrière de la nacelle 1, comme indiqué précédemment.

Les capteurs piézoélectriques C1, C2, placés de manière à pouvoir détecter les mouvements de la partie déplacée ou déformée du bord aval de la nacelle, envoient quant à eux aux modules électroniques d'acquisition 29 des informations électriques représentatives de ce déplacement ou de cette déformation.

La communication entre le module 29 et le module 23 permet d'agir sur les actionneurs piézoélectriques P1, P2 jusqu'à ce que la position ou la déformation souhaitée soit obtenue.

Comme on peut donc le comprendre, cet ensemble de commandes utilise la double propriété des éléments piézoélectriques, qui est non seulement de pouvoir se déformer et donc provoquer un mouvement lorsqu'ils sont soumis à une variation de champ électrique, mais également de pouvoir engendrer une telle variation de champ électrique lorsqu'ils sont soumis à des forces de déplacement.

A titre indicatif, les tensions utilisées avec les éléments piézoélectriques sont comprises entre 100 volts et 1500 volts.

Comme on peut donc le comprendre à la lumière de la description qui précède, l'invention fournit des moyens extrêmement simples, légers et peu encombrants, permettant de faire varier la section d'une tuyère de nacelle.

Une telle variation est obtenue par simple envoi d'une tension électrique appropriée dans des éléments piézoélectriques correctement placés.

La présente invention est particulièrement adaptée aux nacelles de nouvelle génération, destinées aux moteurs à très haut taux de dilution, qui seront plus minces et plus courtes.

Jusqu'à présent, on n'avait nullement pensé à utiliser des éléments piézoélectriques pour réaliser des tuyères à section variable, car on pensait que les efforts en jeu étaient incompatibles avec ceux que permettent de fournir de tels éléments.

C'est au cours d'expérimentation répétées que la demanderesse s'est rendue compte qu'en empilant de tels éléments, on arrivait à obtenir des efforts d'actionnement tout à fait compatibles avec ceux nécessaires dans la nacelle, et ce, avec un poids global de ces éléments nettement inférieur à celui d'actionneurs hydrauliques ou électromécaniques classiques.

Bien entendu, la présente invention n'est nullement limitée aux modes de réalisation décrits et représentés, fournis à titre de simples exemples.

## Revendications

1. Tuyère de section variable (3) pour nacelle (1) d'aéronef, dont au moins une partie (V1, V2, V3 ; B) est mobile entre au moins une position de moindre section et au moins une position de plus grande section, et comprenant des moyens pour déplacer ladite partie entre lesdites positions, ces moyens de déplacement comprenant d'une part des actionneurs piézoélectriques (P, Pa1, P2), et d'autre part des moyens de commande de ces actionneurs, les dits actionneurs étant disposés d'une manière choisie parmi les deux suivantes :
- lesdits actionneurs (P1, P2) sont disposés sur les deux faces de ladite partie (B),
- lesdits actionneurs (P) sont disposés bout à bout de façon continue pour former des bielles d'actionnement.

2. Tuyère selon la revendication 1, dans laquelle lesdits actionneurs (P1, P2) sont collés sur ladite partie mobile déformable (B).

3. Tuyère selon la revendication 1, dans laquelle ladite partie mobile comprend au moins un volet articulé (V1, V2, V3).

4. Tuyère selon la revendication 1, dans laquelle des moyens d'amplification de mouvement (15,17) sont interposés entre lesdites bielles (P) et ladite partie mobile.

5. Tuyère selon l'une quelconque des revendications précédentes, dans laquelle des capteurs piézoélectriques (C1, C2) sont positionnés pour détecter la position de ladite partie mobile.

6. Tuyère selon la revendication 5, dans laquelle lesdits moyens de commande comprennent d'une part un module électronique de supervision (23) apte à envoyer une tension de commande dans lesdits actionneurs piézoélectriques (P1, P2), et d'autre part un module électronique d'acquisition (29), apte à recevoir une tension de position provenant desdits capteurs piézoélectriques (C1, C2), ces deux modules définissant une boucle d'asservissement.

7. Nacelle (1) pour turboréacteur d'aéronef, comprenant une tuyère de section variable (3) conforme à l'une quelconque des revendications précédentes.

## Patentansprüche

1. Düse mit variablem Querschnitt (3) für eine Flugzeuggondel (1), von der mindestens ein Teil (V1, V2, V3; B) zwischen mindestens einer Position mit einem geringeren Querschnitt und mindestens einer Position mit einem größeren Querschnitt beweglich ist, und die Mittel zum Verschieben des Teils zwischen den Positionen umfasst, wobei diese Mittel zum Verschieben einerseits piezoelektrische Stellglieder (P, Pa1, P2), und andererseits Mittel zum Steuern dieser Stellglieder umfassen, wobei die Stellglieder in einer aus den beiden Folgenden ausgewählten Art und Weise angeordnet sind:
- die Stellglieder (P1, P2) sind auf den beiden Seiten des Teils (B) angeordnet,
- die Stellglieder (P) sind kontinuierlich aneinandergereiht angeordnet, um Stellkurbelstangen zu bilden.

2. Düse nach Anspruch 1, wobei die Stellglieder (P1, P2) auf den verformbaren beweglichen Teil (B) geklebt sind.

3. Düse nach Anspruch 1, wobei der bewegliche Teil mindestens eine gelenkige Klappe (V1, V2, V3) umfasst.

4. Düse nach Anspruch 1, wobei Bewegungsverstärkungsmittel (15, 17) zwischen den Kurbelstangen (P) und dem beweglichen Teil eingesetzt sind.

5. Düse nach einem der vorstehenden Ansprüche, wobei piezoelektrische Sensoren (C1, C2) positioniert sind, um die Position des beweglichen Teils zu detektieren.

6. Düse nach Anspruch 5, wobei die Mittel zum Steuern einerseits ein elektronisches Überwachungsmodul (23), das imstande ist, eine Steuerspannung in die piezoelektrischen Stellglieder (P1, P2) zu senden, und andererseits ein elektronisches Erfassungsmodul (29) umfassen, das imstande ist, eine Positionsspannung zu empfangen, die aus den piezoelektrischen Sensoren (C1, C2) stammt, wobei diese beiden Module eine Ansteuerungsschleife definieren.

7. Gondel (1) für ein Flugzeugturbotriebwerk, umfassend eine Düse mit variablem Querschnitt (3) nach einem der vorstehenden Ansprüche.

## Claims

1. A variable section nozzle (3) for an aircraft nacelle (1), at least one portion (V1, V2, V3; B) of which is movable between at least one position of smaller section and at least one position of larger section, and comprising means for displacing said portion between said positions, said displacement means comprising, on the one hand, piezoelectric actuators (P, Pa1, P2), and, on the other hand, means for controlling these actuators, said actuators being disposed in a manner selected amongst the following two:
- said actuators (P1, P2) are disposed on both faces of said portion (B),
- said actuators (P) are disposed end to end in a continuous manner so as to form actuation connecting rods.

2. The nozzle according to claim 1, wherein said actuators (P1, P2) are glued on said deformable movable portion (B).

3. The nozzle according to claim 1, wherein said movable portion comprises at least one hinged flap (V1, V2, V3).

4. The nozzle according to claim 1, wherein movement amplification means (15, 17) are interposed between said connecting rods (P) and said movable portion.

5. The nozzle according to any one of the preceding claims, wherein piezoelectric sensors (C1, C2) are positioned so as to detect the position of said movable portion.

6. The nozzle according to claim 5, wherein said control means comprise, on the one hand, an electronic supervision module (23) adapted to send a control voltage in said piezoelectric actuators (P1, P2) and, on the other hand, an electronic acquisition module (29) adapted to receive a position voltage originating from said piezoelectric sensors (C1, C2), these two modules defining a servo-control loop.

7. A nacelle (1) for an aircraft turbojet engine, comprising a variable section nozzle (3) in accordance with any one of the preceding claims.
